# EUROPÄISCHE PATENTSCHRIFT

(11) **EP 3 328 564 B1**
(45) Veröffentlichungstag und Bekanntmachung des Hinweises auf die Patenterteilung: **23.01.2019**
(21) Anmeldenummer: 16744399.3
(22) Anmeldetag: 27.07.2016
(51) Int. Cl.: B21B 31/07

(54) **WALZGERÜST ZUM WALZEN VON WALZGUT**
ROLLING STAND FOR THE ROLLING OF ROLLING STOCK
CAGE DE LAMINOIR DESTINÉE AU LAMINAGE D'UNE PIÈCE À LAMINER

(30) Priorität: 31.07.2015 DE 102015214642; 13.10.2015 DE 102015219864; 30.11.2015 DE 102015223676
(43) Veröffentlichungstag der Anmeldung: 06.06.2018
(73) Patentinhaber: SMS Group GmbH, 40237 Düsseldorf (DE)
(72) Erfinder: KNIE, Daniel, 57258 Freudenberg (DE); ALKEN, Johannes, 57076 Siegen (DE)
(74) Vertreter: Klüppel, Walter
(86) Internationale Anmeldenummer: PCT/EP2016/067906
(87) Internationale Veröffentlichungsnummer: WO 2017/021251

(56) Entgegenhaltungen:
- EP-A1- 1 863 603
- WO-A1-2013/048836
- DE-A1-102012 224 511
- JP-A- S61 165 217
- US-A- 3 453 031

## Beschreibung

Die Erfindung betrifft ein Walzgerüst zum Walzen von vorzugsweise metallischem Walzgut. Darüber hinaus betrifft die Erfindung eine Walzstraße mit einer Mehrzahl von Walzgerüsten.

Derartige Walzgerüste sind im Stand der Technik grundsätzlich bekannt, z. B. aus der WO 2013/048836 A1. Das dort offenbarte Walzgerüst zum Walzen von metallischem Walzgut offenbart eine Walze mit zwei Walzenzapfen, die jeweils in einem Einbaustück, auch Lagergehäuse genannt, drehbar gelagert sind. Hier erfolgt die Lagerung der Walzenzapfen in hoch belasteten Gerüsten in jeweils einem zylinderförmigen Aufnahmeraum in dem Einbaustück. Das bekannte Walzgerüst ist an einen Niederdruckkreislauf für das Kühl- und/oder Schmiermittel angeschlossen.

Der Niederdruckkreislauf für das Kühl- und/oder Schmiermittel umfasst eine Niederdruckpumpe und einen Tank für das Kühl- oder Schmiermittel, welche beide typischerweise fernab des Walzgerüstes, z. B. im Keller einer Walzstraße, angeordnet sind. Niederdruckleitungen, welche typischerweise an den Ständerfenstern des Walzgerüstes entlanggeführt sind, verbinden die Niederdruckpumpe mit den Niederdruckzuläufen in dem Aufnahmeraum des Einbaustücks für den Walzenzapfen, wobei diese Niederdruckzuläufe typischerweise auf 90° oder 270° Positionen zur Lastzone am Umfang des Aufnahmeraumes verteilt angeordnet sind. Die Versorgung des Aufnahmeraums bzw. des Ringspaltes zwischen dem Einbaustück und dem darin gelagerten Walzenzapfen mit Kühl- und/oder Schmiermittel unter Niederdruck, d. h. beispielsweise 2 bar, ist in der Regel ausreichend für eine hydrodynamische Schmierung.

Die aus der besagten internationalen Patentanmeldung WO 2013/048836 A1 bekannte Anordnung der Niederdruckpumpe fernab des Walzgerüstes ist jedoch aus verschiedenen Gründen nicht sinnvoll:
Zum einen sind die notwendigen Niederdruckleitungen zur Verbindung der Niederdruckpumpe mit den Niederdruckkanälen im Einbaustück relativ lang. Weiterhin ist ein eigener externer Antrieb für die Niederdruckpumpe erforderlich.

Der Erfindung liegt die Aufgabe zugrunde, ein bekanntes Walzgerüst und eine bekannte Walzstraße zum Walzen von Walzgut dahingehend weiterzubilden, dass die Kosten für den Antrieb der mindestens einen Niederdruckpumpe verringert werden können.

Diese Aufgabe wird durch den Gegenstand des Patentanspruchs 1 gelöst. Dieser ist dadurch gekennzeichnet, dass ein Getriebe vorgesehen ist, welches an der ballenfernen Seite mindestens eines der Einbaustücke angeordnet ist zum Drehkoppeln der mindestens einen Niederdruckpumpe mit dem in dem Aufnahmeraum drehbar gelagerten Stützwalzenzapfen.

Das beanspruchte Getriebe bietet den Vorteil, dass die Niederdruckpumpe durch den Walzenzapfen angetrieben wird, wenn dieser sich dreht. Damit ist ein separater Antrieb, typischerweise ein Elektromotor für die Niederdruckpumpe entbehrlich; dessen Kosten sowie die Kosten für elektronische oder hydraulische Versorgungsleitungen für den Antrieb können eingespart werden.

Die vorliegende Erfindung und insbesondere die Ansprüche gelten sowohl für Quarto-Walzgerüste mit zwei Arbeits- und zwei Stützwalzen sowie für Sexto-Walzgerüste mit jeweils zwei Arbeits-, zwei Zwischen- und zwei Stützwalzen. Die vorliegende Erfindung gilt aber auch für Duo-Walzgerüste mit nur zwei Arbeitswalzen, welche einen Walzspalt aufspannen. Für diesen Fall ist der Begriff "Stützwalze" in den Ansprüchen und in der Beschreibung als Arbeitswalze zu interpretieren.

Die Erfindung betrifft ausdrücklich nur Niederdruckpumpen für typischerweise weniger als 100 bar in einem Niederdruckkreislauf für Kühl- und/oder Schmiermittel an einem Walzgerüst. Ein eventuell zusätzlich an einem Walzgerüst vorhandener Hochdruckreislauf mit einer Hochdruckpumpe für Drücke 500 bis 2000 bar ist ausdrücklich nicht Gegenstand der vorliegenden Erfindung, insbesondere nicht der vorliegenden Ansprüche.

Gemäß einem ersten Ausführungsbeispiel ist das Getriebe als Zahnradgetriebe ausgebildet, mit einem Ritzel und einem Treibrad, welche direkt oder indirekt miteinander drehgekoppelt sind. Das Ritzel ist drehfest auf die Antriebswelle der Niederdruckpumpe aufgesetzt oder das freie Ende der Antriebswelle ist selbst als Ritzel ausgebildet. Gemäß einer ersten Variante des Getriebes ist das Treibrad als außenverzahnter Zahnkranzring ausgebildet, welcher vorzugsweise an der ballenfernen Seite drehfest mit dem Walzenzapfen oder mit einer auf den Walzenzapfen drehfest aufgesetzten Zapfenbuchse verbunden ist. Die Niederdruckpumpe ist dann so angeordnet, dass das Ritzel ihrer Antriebswelle mit dem außenverzahnten Zahnkranzring vorzugsweise direkt, d. h. ohne Zwischenschaltung weiterer Zahnräder in Eingriff steht. Wenn eine bestimmte Übersetzung erforderlich ist, können selbstverständlich noch weitere Zahnräder zwischengeschaltet sein. Insbesondere bei der besagten ersten Variante des Getriebes kann die Niederdruckpumpe vorteilhafterweise platzsparend in eine Nische des Einbaustücks eingebaut sein.

Eine zweite Variante des Getriebes sieht vor, dass das Treibrad als innenverzahnter Zahnkranzring ausgebildet ist, welcher an der ballenfernen Stirnseite des Walzenzapfens drehfest und vorzugsweise koaxial mit diesem verbunden ist. Die Niederdruckpumpe ist dann an der Stirnseite des Walzenzapfens in axialer Richtung derart vorgelagert angeordnet, dass das Ritzel der Antriebswelle der Niederdruckpumpe mit dem innenverzahnten Zahnkranzring vorzugsweise direkt in Eingriff steht.

Der Ausdruck, dass das Ritzel direkt mit dem Treibrad in Eingriff steht, bedeutet, dass die Zähne des Ritzels in die Verzahnung des Treibrades eingreifen. Demgegenüber bedeutet ein indirektes in Eingriff stehen, dass das Ritzel und das Treibrad über eine Kette oder unter Zwischenschaltung weiterer Zahnräder oder auf sonstige Weise miteinander drehgekoppelt sind.

Wenn in dem Einbaustück eine Lagerbuchse als Verschleißteil vorgesehen ist zum Aufspannen des Aufnahmeraumes, münden die Niederdruckzu- und - ablaufkanäle für das Kühl- und/oder Schmiermittel an der Innenseite der Lagerbuchse in den Aufnahmeraum. Die Kanäle sind in dem Einbaustück als Kanäle ausgebildet und stehen mit den Niederdruckleitungen außerhalb des Einbaustücks in fluidleitender Verbindung.

Gemäß einem weiteren Ausführungsbeispiel sind die Einbaustücke, auch Ölfilmlager genannt, quasi ölverlustfrei betreibbar, also gut abgedichtet ausgebildet und ist dem Walzgerüst ein Tank bzw. sind dem Walzgerüst vorzugsweise mindestens zwei Tanks für seine vier Ölfilmlager für seine zwei Stützwalzen individuell zugeordnet. Vorteilhafterweise erlaubt erst die verbesserte Abdichtungstechnik die insgesamt für ein Walzgerüst notwendige zu bevorratende Ölmenge gegenüber dem Stand der Technik deutlich zu reduzieren.

Der Begriff "quasi ölverlustfrei" bedeutet im Sinne der Erfindung, dass die Ölverluste pro Ölfilmlager weniger als 0,1 l/h, vorzugsweise sogar weniger als 0,01 l/h betragen.

Die zu bevorratende Ölmenge liegt bei den Ölfilmlagern mit der verbesserten Abdichtungstechnik nur noch bei 50 % oder weniger im Vergleich zu der traditionell zu bevorratenden Ölmenge pro Walzgerüst bzw. pro Walzstraße.

Aufgrund der verringerten Menge können vergleichsweise kleine Tanks pro Walzgerüst bzw. pro Ölfilmlager vorgesehen werden. Das gesamte Fassungsvolumen aller Tanks pro Walzgerüst beträgt beispielsweise zwischen 1 und 8 m³. Wegen der deutlich geringeren zu bevorratenden Ölmenge lohnt es sich auch finanziell auf synthetische Öle bzw. Additive zurückzugreifen, die nicht nur bessere Eigenschaften bezüglich Demulgieren, Ölschaumbildung, etc. haben, sondern auch für die Funktion der Ölfilmlager von Vorteil wären. Durch die Verwendung der beanspruchten dezentralen Tanks pro Walzgerüst bzw. pro Ölfilmlager reduzieren sich vorteilhafterweise auch die Kosten für die Fundamentarbeiten, aufgrund eines kleineren bzw. nicht mehr benötigen Ölkellers sowie die Kosten für die zentrale Ölverrohrung.

Verschiedene Ausführungsbeispiele für die Anordnung der mindestens zwei Tanks an einem Walzgerüst sind in den abhängigen Ansprüchen beschrieben. Insbesondere kann mindestens einer der Tanks in einem Lagergehäuse, auch Einbaustück genannt, der Ölfilmlager integriert ausgebildet sein. Das Öl kann so in dem Lagergehäuse bevorratet werden.

Die oben genannte Aufgabe wird weiterhin für eine Walzstraße durch den Anspruch 15 gelöst. Demnach ist mindestens eines der Walzgerüste nach einem der vorangegangen Ansprüche ausgebildet.

Die Vorteile dieser beanspruchten Ausgestaltung für die Walzgerüste einer Walzstraße entsprechen den oben für ein einzelnes Walzgerüst genannten Vorteilen. Insbesondere kann die zentrale Ölversorgung für sämtliche Walzgerüste der Walzstraße im Keller entfallen mit den damit verbunden Kosteneinsparungen.

Gemäß einem Ausführungsbeispiel für die Walzstraße sind die Tanks der vorderen Walzgerüste der Walzstraße, soweit die Traglast der Walzgerüste einen vorgegebenen Traglastschwellenwert erreicht, mit einer ersten Ölsorte befüllt, welche speziell für Traglasten bis zum Traglastschwellenwert ausgelegt ist.

Weiterhin sind die Tanks der hinteren Walzgerüste der Walzstraße, soweit die Traglast dieser Walzgerüste den vorgegebenen Traglastschwellenwert unterschreitet, mit einer zweiten Ölsorte befüllt, welche speziell für die Drehzahlen der Stützwalzen in den hinteren Walzgerüsten ausgelegt ist. Das Vorsehen unterschiedlicher Ölsorten und die damit verbundenen Vorteile für den Betrieb der jeweiligen Walzgerüste sind durch die beanspruchte Dezentralisierung der Ölversorgung für die einzelnen Ölfilmlager überhaupt erst möglich.

Schließlich bietet die beanspruchte dezentrale Ölversorgung der einzelnen Gerüste den Vorteil, dass die Größe bzw. die Volumina der Tanks individuell auf den jeweiligen Ölbedarf der einzelnen Gerüste abgestimmt werden kann. Dies kann insbesondere in einer Walzstraße von Bedeutung sein, wo für die relativ langsam laufenden vorderen Walzgerüste weniger Öl bevorratet werden muss als für die schneller laufenden hinteren Walzgerüste. Jedem Tank bzw. jedem Ölkreislauf kann eine eigene Filtereinrichtung für das Öl und/oder eine Kühleinrichtung für das Öl zugeordnet sein.

Der Beschreibung sind 7 Figuren beigefügt, wobei
- Figur 1: ein erstes Ausführungsbeispiel für die Zuordnung eines Tanks zu den Ölfilmlagern eines Walzgerüstes;
- Figur 2: einen Längsschnitt durch ein Einbaustück mit darin gelagertem Walzenzapfen mit einer ersten Variante des Getriebes zum Antreiben der Niederdruckpumpe an einer ersten Einbauposition;
- Figur 3: einen Längsschnitt durch das Einbaustück mit darin gelagertem Walzenzapfen mit einer zweiten Variante des Getriebes zum Antreiben der Niederdruckpumpe an der zweiten Einbauposition;
- Figur 4: ein zweites Ausführungsbeispiel für die Zuordnung der Tanks zu den Ölfilmlagern des Walzgerüstes;
- Figur 5: ein drittes Ausführungsbeispiel für die Zuordnung der Tanks zu den Ölfilmlagern des Walzgerüstes;
- Figur 6: ein viertes Ausführungsbeispiel für die Zuordnung eines Tanks zu den Ölfilmlagern eines Walzgerüstes; und
- Figur 7: eine Walzstraße mit einer Mehrzahl von Walzgerüsten
zeigt.

Die Erfindung wird nachfolgend unter Bezugnahme auf die genannten Figuren in Form von Ausführungsbeispielen detailliert beschrieben. In allen Figuren sind gleiche technische Elemente mit gleichen Bezugszeichen bezeichnet. Das Bezugszeichen 140 wird auch stellvertretend für alle Varianten des Bezugszeichens, d. h. für 140', 140", 140-1, 140-2, 140-I, 140-II, 140-III, und 140-IV verwendet. Analoges gilt für das Bezugszeichen 130.

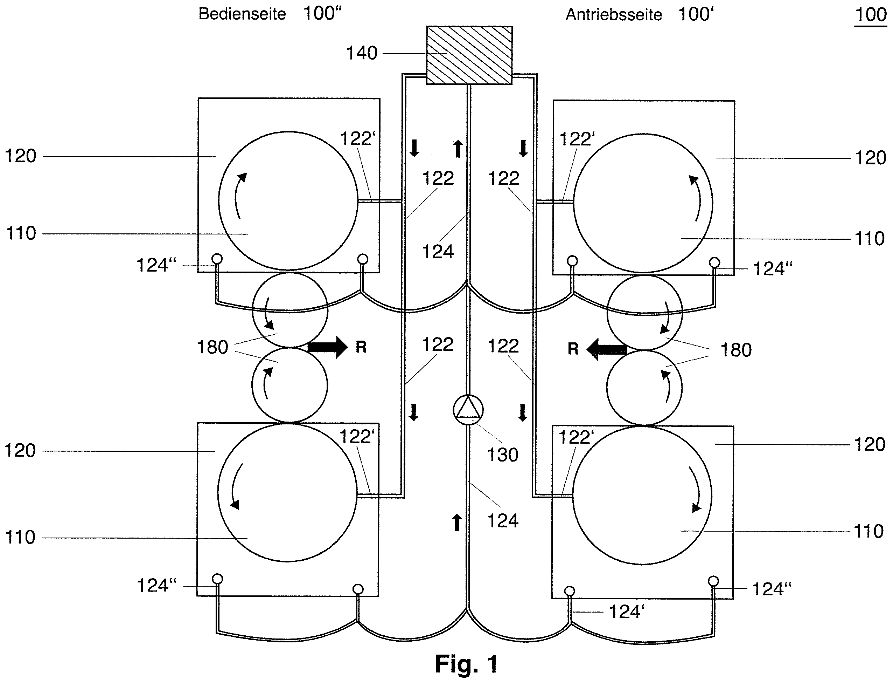

Alle Figuren 1 und 4 bis 7 zeigen beispielhaft Quarto-Walzgerüste 100 mit jeweils einem Walzenständer 100' auf der Antriebsseite und einem Walzenständer 100" auf der Bedienseite. Jedes Walzgerüst weist zwei Stützwalzen auf, die mit ihren vier Walzenzapfen 110 jeweils in Ölfilmlagern 120 drehbar gelagert sind. Jedes Ölfilmlager 120 verfügt über Niederdruckzulaufleitungen 122 und über Niederdruckablaufleitungen 124. Die Rückläufe werden in den Tank oder die Tanks 140 zurückgeführt; die Zuläufe werden aus dem jeweiligen Tank gespeist. Bei den beiden mittleren Walzen handelt es sich um Arbeitswalzen 180, welche typischerweise einen Walzspalt aufspannen, zwischen dem Walzgut in Walzrichtung R hindurch befördert und gewalzt wird. Die beiden Arbeitswalzen 180 werden abgestützt durch eine obere und eine untere Stützwalze.

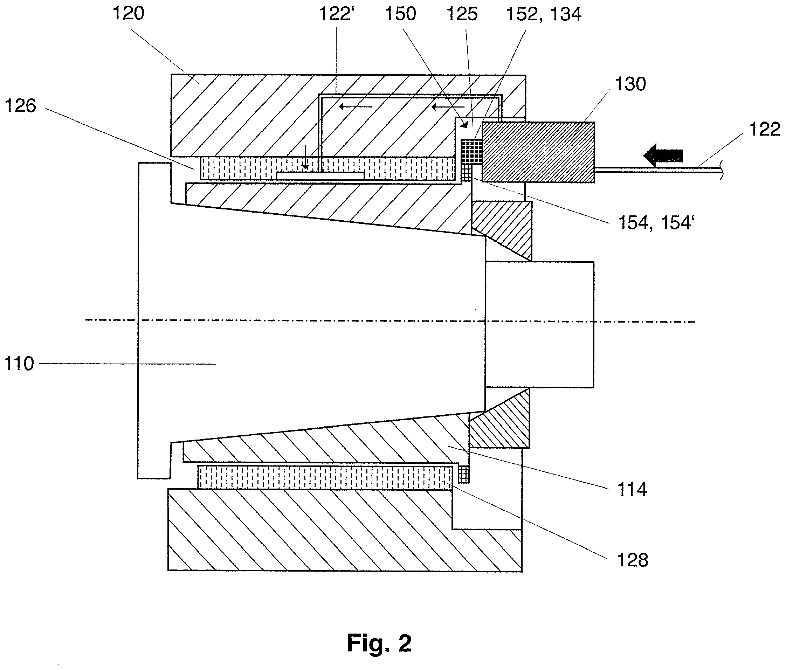

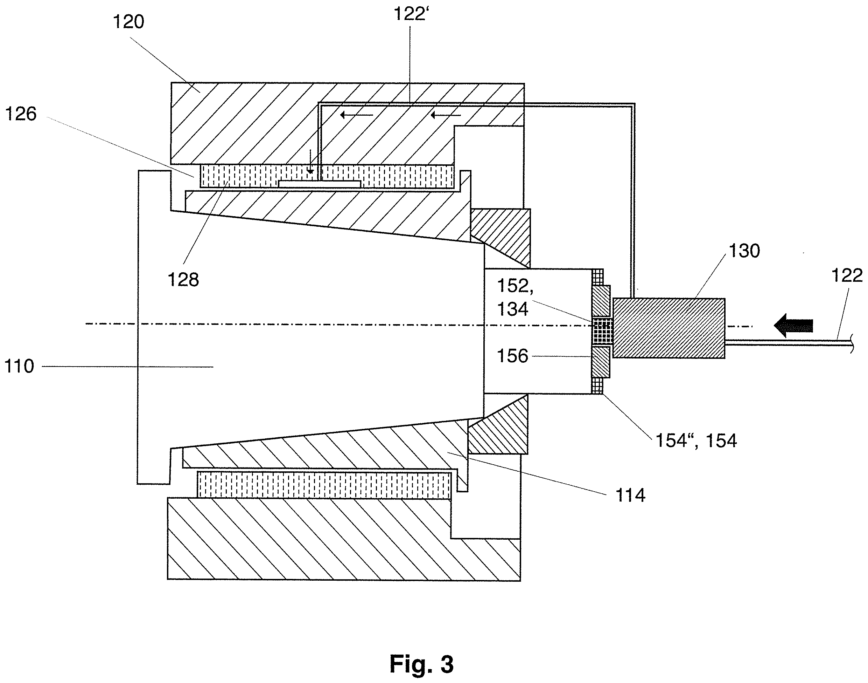

Gemäß den Figuren 2 und 3 weisen die Einbaustücke 120, auch Lagergehäuse genannt, einen zylinderförmigen, eventuell auch konischen Aufnahmeraum 126 auf, in dem die jeweiligen Walzenzapfen 110 der Stützwalzen drehbar gelagert sind. Optional kann der Aufnahmeraum 126 von einer Lagerbuchse 128 aufgespannt werden, welche in dem Einbaustück drehfest angeordnet ist. Zwischen dem Einbaustück 120 bzw. der Lagerbuchse 128 und dem Walzenzapfen 110 bzw. einer optional auf den Walzenzapfen aufgesetzten Zapfenbuchse 114 ist ein Ringspalt ausgebildet, der im Betrieb des Walzgerüstes mit Kühl- und/oder Schmiermittel befüllt ist. Zur Versorgung des Ringspaltes mit dem Kühl- und/oder Schmiermittel sind an der Peripherie des Aufnahmeraumes 126 Zu- und Abläufe für das Kühl- und/oder Schmiermittel vorgesehen, welche die Aufnahmeraum-seitigen Enden des Niederdruckzulaufkanals und des Niederdruckablaufkanals repräsentieren. Der Niederdruckzulaufkanal 122' mündet typischerweise im Bereich einer 90°- bzw. 270°-Position zu der Lastzone in den Aufnahmeraum.

Gemäß Figur 1 ist dem Walzgerüst 100 ein Niederdruckkreislauf zugeordnet, um die besagten Niederdruckzulaufkanäle 122' in den Einbaustücken mit dem Kühl- und/oder Schmiermittel zu versorgen. Aus einem Tank 140 läuft das Kühl- und/oder Schmiermittel vorzugsweise geodätisch über mindestens eine Niederdruckzulaufleitung 122 des Niederdruckkreislaufs in die Niederdruckzulaufkanäle 122 im Innern der Einbaustücke. Neben den Niederdruckzulaufkanälen 122' sind in den Einbaustücken 120 auch Niederdruckablaufkanäle 124' zu erkennen, welche ihrerseits mit den in den Tank zurücklaufenden Niederdruckablaufleitungen 124 leitungsverbunden sind. Der Niederdruckkreislauf umfasst mindestens eine Niederdruckpumpe 130 zum Zurückpumpen des Kühl- und/oder Schmiermittels mit niedrigem Druck, beispielsweise 1 bis 10 bar, vorzugsweise 2 bar in den Tank 140.

Figur 2 zeigt einen Längsschnitt durch ein Einbaustück 120 mit darin gelagertem Walzenzapfen 110 einer Stützwalze mit einer ersten Variante des erfindungsgemäßen Getriebes zwischen der Niederdruckpumpe und dem Walzenzapfen. Konkret ist zu erkennen, dass die Niederdruckpumpe 130 in einer Nische 125 des Einbaustücks 120 derart eingebaut ist, dass ihre Antriebswelle 134 vorzugsweise parallel zur Längsachse der Stützwalze ausgerichtet ist. Das nach außen vorstehende freie Ende der Antriebswelle 134 ist vorzugsweise seinerseits als Zahnrad bzw. als Ritzel ausgebildet oder es ist ein Ritzel 152 drehfest auf diese Antriebswelle montiert. Bei der in Figur 2 gezeigten ersten Variante des Getriebes steht das Ritzel 152 bzw. das antriebswellenseitige Zahnrad in direktem Eingriff mit einem außenverzahnten Zahnkranzring 154' eines Treibrades 154, welches koaxial an der ballenfernen Seite auf dem Walzenzapfen oder einer auf den Walzenzapfen aufgesetzten Zapfenbuchse 114 drehfest montiert ist. Das Getriebe 140 besteht deshalb im vorliegenden Fall aus dem Ritzel 152 und dem Treibrad 154 mit außenverzahntem Zahnkranzring 154', welche direkt miteinander in Eingriff stehen. Alternativ könnte das Getriebe 150 auch eine indirekte Kopplung von Ritzel und Treibrad vorsehen, z. B. über eine Kette oder zwischengeschaltete weitere Getrieberäder. Der gezeigte Einbau der Niederdruckpumpe 130 in die Nische 125 des Einbaustücks 120 stellt eine sehr kompakte Bauweise dar, was den grundsätzlich immer recht beengten Raumverhältnissen im Umfeld von Walzgerüsten sehr entgegenkommt.

In Figur 2 ist weiter zu erkennen, dass die Niederdruckpumpe 130 eingangsseitig an die Niederdruckzulaufleitung 122 angeschlossen ist. Ausgangsseitig pumpt die Niederdruckpumpe 130 das Kühl- und/oder Schmiermittel über die Niederdruckzulaufkanäle 122' in den Ringspalt zwischen der Lagerbuchse 128 und der Zapfenbuchse 114. Die Niederdruckzulaufkanäle 122' sind weitgehend im Inneren des Einbaustücks 120 ausgebildet.

Figur 3 zeigt einen Längsschnitt durch das Einbaustück 120 mit dem darin gelagerten Walzenzapfen der Stützwalze. Im Unterschied zu Figur 2 ist hier die Niederdruckpumpe 130 an der ballenfernen Stirnseite des Walzenzapfens 110 angeordnet. Das Ritzel 152 auf der Antriebswelle 134 der Niederdruckpumpe ist hier beispielhaft über Zwischenzahnräder 156 mit dem Treibrad 154 mit innenverzahntem Zahnkranzring 154" mit dem Walzenzapfen 110 drehgekoppelt. Das Treibrad ist vorzugsweise konzentrisch auf der Stirnseite des Walzenzapfens 110 drehfest montiert.

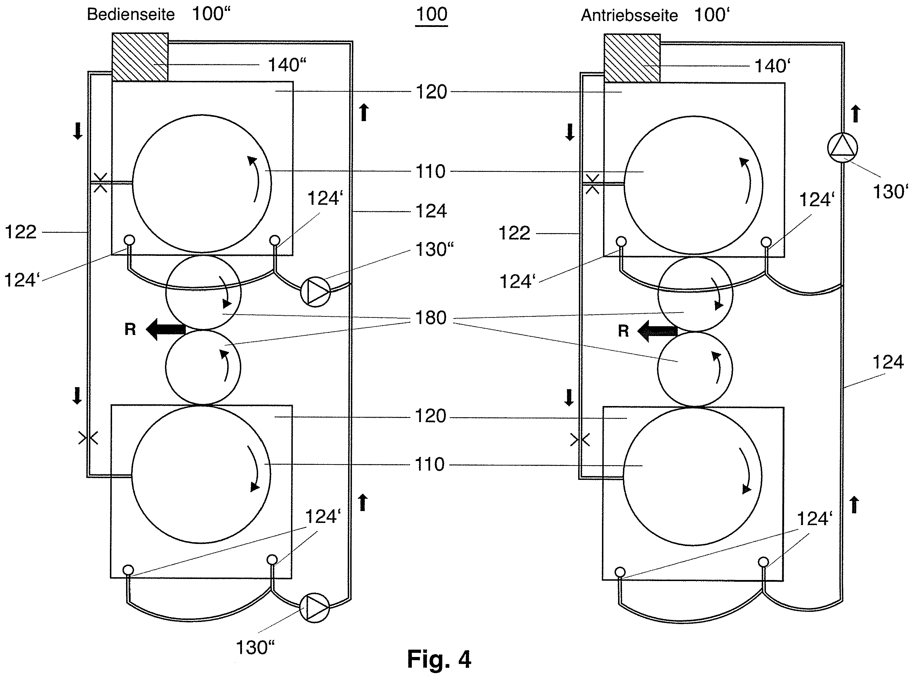

Figur 4 zeigt ein weiteres Ausführungsbeispiel für die Tankanordnung an bzw. auf dem Walzgerüst 100. Konkret ist gemäß diesem Ausführungsbeispiel ein erster gemeinsamer Tank 140', für die beiden Ölfilmlager 120 der oberen und der unteren Stützwalze an dem Walzenständer auf der Antriebsseite 100' vorgesehen. Weiterhin ist ein zweiter gemeinsamer Tank 140" für die Ölfilmlager 120 der oberen und der unteren Stützwalze an dem Walzenständer auf der Bedienseite 100" des Walzgerüstes 100 vorgesehen. Der erste Tank 140' ist vorzugsweise oben an dem Walzenständer an der Antriebsseite 100' angeordnet, während der zweite gemeinsame Tank 140" oben auf dem Walzenständer auf der Bedienseite 100' angeordnet ist.

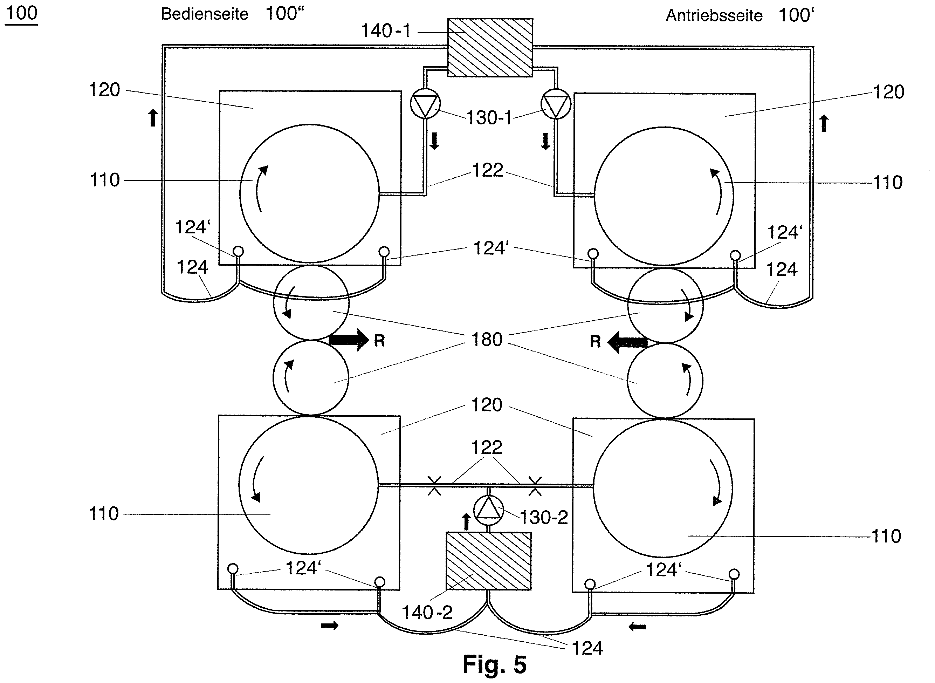

Gemäß Figur 5 ist bei einem weiteren Ausführungsbeispiel ein erster gemeinsamer Tank 140-1 für die beiden Ölfilmlager 120 der oberen Stützwalze auf der Antriebsseite und der Bedienseite des Walzgerüstes vorgesehen. Darüber hinaus ist ein zweiter gemeinsamer Tank 140-2 für die beiden Ölfilmlager 120 der unteren Stützwalze auf der Antriebs- und der Bedienseite vorgesehen. Der erste gemeinsame Tank 140-1 ist vorzugsweise oben auf dem Walzenständer 100' auf der Antriebsseite oder oben auf dem Walzenständer 100" auf der Bedienseite des Walzgerüstes angeordnet. Dasselbe gilt vorzugsweise auch für den zweiten gemeinsamen Tank 140-2.

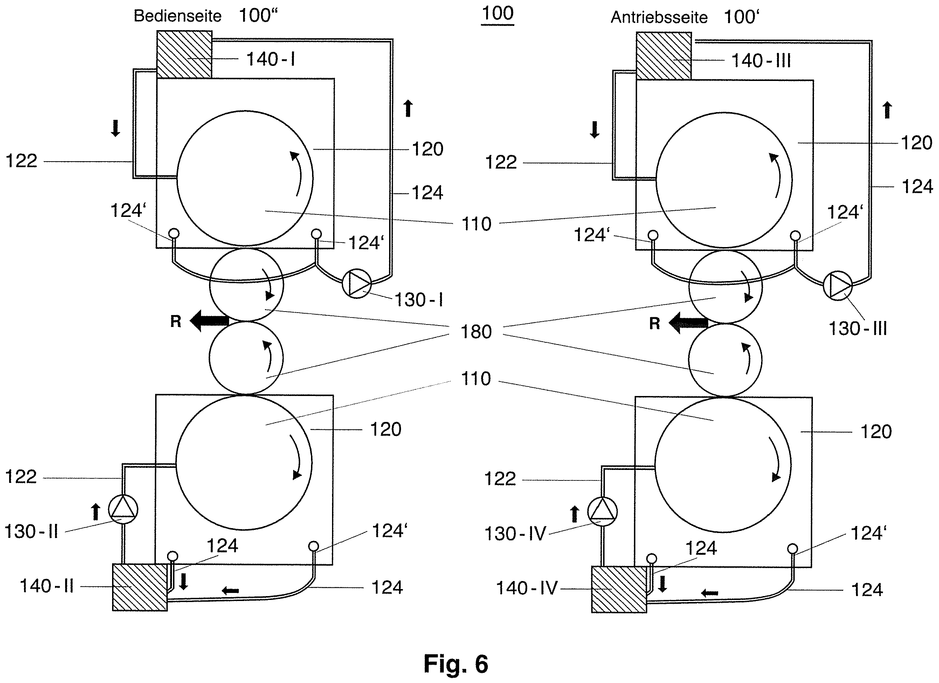

Figur 6 veranschaulicht ein drittes Ausführungsbeispiel der vorliegenden Erfindung, wonach jedem der vier Ölfilmlager 120 für die beiden Stützwalzen jeweils ein eigener Tank 140-I, 140-II, 140-III und 140-IV individuell zugeordnet ist.

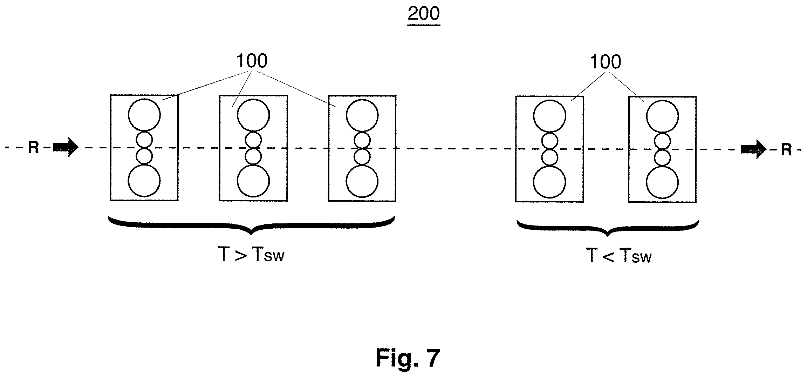

Figur 7 zeigt eine typische Walzstraße zum Warm- bzw. Kaltwalzen von metallischem Walzgut. Sie besteht im Wesentlichen aus einer Mehrzahl von in einer Linie hintereinander aufgestellten Walzgerüsten 100. Gemäß der Erfindung ist mindestens eines der Walzgerüste 100, vorzugsweise sind jedoch alle Walzgerüste ausgebildet nach einem der zuvor beschriebenen Ausführungsbeispiele für ein einzelnes Walzgerüst.

Bei der Anordnung der Walzgerüste in einer Walzstraße ist zu beachten, dass die vorderen, d.h. die in Walzrichtung stromaufwärts befindlichen Walzgerüste typischerweise eine größere Walzkraft aufbringen als die hinteren, d.h. die stromabwärts befindlichen Walzgerüste. Deshalb sind die vorderen Walzgerüste typischerweise für hohe Traglasten (T) bis T = Tsw mit Tsw: Traglastschwellenwert ausgelegt. Demgegenüber sind die hinteren Walzgerüste typischerweise nur für Traglasten mit T < Tsw ausgelegt; gleichzeitig sind die hinteren Walzgerüste jedoch für größere Drehzahlen ausgelegt. Aufgrund dieser unterschiedlichen Betriebsbedingungen empfiehlt sich die Verwendung von unterschiedlichen Ölsorten für die vorderen und hinteren Walzgerüste in der Walzstraße. Die Verwendung von unterschiedlichen Ölsorten wird durch das erfindungsgemäße Vorsehen von individuellen Tanks pro Walzgerüst überhaupt erst ermöglicht.

Die besagten unterschiedlichen Betriebsbedingungen haben weiterhin zur Folge, dass für die vorderen Walzgerüste weniger Öl vorgehalten werden muss als für die hinteren Walzgerüste; dementsprechend kann das für die vorderen Walzgerüste vorzusehende Tankvolumen pro Walzgerüst deutlich kleiner gewählt werden als für die schnell drehenden hinteren Walzgerüste.

Konkret ist vorgesehen, das bei der erfindungsgemäßen dezentralen Ölversorgung vorzuhaltende Ölvolumen pro Walzgerüst auf die Hälfte zu reduzieren gegenüber der traditionellen zentralen Ölversorgung. So beträgt das vorzuhaltende Tankvolumen pro Gerüst bei der vorliegenden Erfindung nur 1 - 8 m³, d.h. bei 4 Ölfilmlagern pro Walzgerüst eine Menge von nur 0,25 - 2 m³ pro Ölfilmlager. Unter Berücksichtigung der beschriebenen Tatsache, dass die vorderen Gerüste der Walzstraße lediglich ein Tankvolumen im unteren angegebenen Bereich und nur die hinteren Walzgerüste größere Tankvolumina benötigen, ergibt sich daraus ein Mittelwert für das Tankvolumen, der erfindungsgemäß kleiner 50 % des traditionell für eine Walzstraße zentral vorgehaltenen Tankvolumens entspricht.

Bei allen Ausführungsbeispielen kann die mindestens eine Niederdruckpumpe 130 in der Niederdruckzulaufleitung und/oder in der Niederdruckablaufleitung sowie innerhalb oder außerhalb der Einbaustücke eingebaut sein.

### Bezugszeichenliste

- 100: Walzgerüst
- 100': Antriebsseite
- 100": Bedienseite
- 110: Stützwalzenzapfen
- 114: Zapfenbuchse
- 120: Einbaustück
- 122: Niederdruckzulaufleitung
- 122': Niederdruckzulaufkanal
- 124: Niederdruckablaufleitung
- 124': Niederdruckablaufkanal
- 125: Nische im Einbaustück
- 126: Aufnahmeraum bzw. Ringspalt
- 128: Lagerbuchse
- 130: Niederdruckpumpe
- 130', 130": Niederdruckpumpe
- 130-1, 130-2: Niederdruckpumpe
- 130-I ... 130-IV: Niederdruckpumpe
- 134: Antriebswelle der Niederdruckpumpe
- 140: Tank
- 140', 140": Tank
- 140-1,140-2: Tank
- 140-I ... 140-IV: Tank
- 150: Getriebe
- 152: Ritzel
- 154: Treibrad
- 154': außenverzahnter Zahnkranzring
- 154": innenverzahnter Zahnkranzring
- 156: Zwischenzahnräder
- 180: Arbeitswalzen
- 200: Walzstraße

- R: Walzrichtung
- T: Tragkraft
- T_{sw}: Traglastschwellenwert

## Patentansprüche

1. Walzgerüst (100) zum Walzen von vorzugsweise metallischem Walzgut; aufweisend:
zwei Stützwalzen mit jeweils zwei Stützwalzenzapfen (110);
vier Einbaustücke (120) in Form von Ölfilmlagern mit jeweils einem zylinderförmigen Aufnahmeraum zur drehbaren Lagerung eines der Stützwalzenzapfen (110); wobei die Einbaustücke in ihrem Innern jeweils mindestens einen Niederdruckzulaufkanal (122') zum Zuführen von Kühl- und/oder Schmiermittel in den Aufnahmeraum und mindestens einen Niederdruckablaufkanal (124') zum Abführen des Kühl- und/oder Schmiermittels aus dem Aufnahmeraum aufweisen; und
mindestens einen Niederdruckkreislauf mit Niederdruckzulaufleitungen (122) zum Verbinden eines Tanks (140) für das Kühl- und/oder Schmiermittel mit dem Niederdruckzulaufkanal (122') des Einbaustücks, mit Niederdruckablaufleitungen (124) zum Verbinden des Niederdruckablaufkanals mit dem Tank und mit mindestens einer Niederdruckpumpe (130) zum Fördern des Kühl- und/oder Schmiermittels in dem Niederdruckkreislauf;
**dadurch gekennzeichnet,**
**dass** ein Getriebe (150) vorgesehen ist, welches an der ballenfernen Seite mindestens eines der Einbaustücke angeordnet ist zum Drehkoppeln der mindestens einen Niederdruckpumpe (130) mit dem in dem Aufnahmeraum drehbar gelagerten Stützwalzenzapfen (110).

2. Walzgerüst (100) nach Anspruch 1,
**dadurch gekennzeichnet, dass**
das Getriebe (150) als Zahnradgetriebe ausgebildet ist mit einem Ritzel (152) und einem Treibrad (154), welche direkt oder indirekt miteinander drehgekoppelt sind; und
das Ritzel (152) drehfest auf die Antriebswelle (134) der Niederdruckpumpe (130) aufgesetzt ist oder das freie Ende der Antriebswelle als das Ritzel (152) ausgebildet ist.

3. Walzgerüst (100) nach Anspruch 2,
**dadurch gekennzeichnet, dass**
das Treibrad (154) als außenverzahnter Zahnkranzring (154') ausgebildet ist, welcher vorzugsweise an der ballenfernen Seite drehfest mit dem Stützwalzenzapfen (110) oder mit einer auf den Stützwalzenzapfen drehfest aufgesetzten Zapfenbuchse (114) verbunden ist; und
die Niederdruckpumpe (130) so angeordnet ist, dass das Ritzel (152) ihrer Antriebswelle (134) mit dem außenverzahnten Zahnkranzring (154'), vorzugsweise direkt, in Eingriff steht.

4. Walzgerüst (100) nach Anspruch 2,
**dadurch gekennzeichnet, dass**
das Treibrad (154) als innenverzahnter Zahnkranzring (154") ausgebildet ist, welcher an der ballenfernen Stirnseite des Stützwalzenzapfens drehfest mit dem Stützwalzenzapfen (110) verbunden ist, wobei die Niederdruckpumpe (130) an der Stirnseite des Stützwalzenzapfens derart vorgelagert angeordnet ist, dass das Ritzel (152) ihrer Antriebswelle (134) mit dem innenverzahnten Zahnkranzring (154"), vorzugsweise direkt, in Eingriff steht.

5. Walzgerüst (100) nach einem der vorangegangenen Ansprüche,
**dadurch gekennzeichnet, dass**
die Niederdruckpumpe (130) in das Einbaustück (120) integriert, beispielsweise in eine Nische des Einbaustücks eingebaut, ist.

6. Walzgerüst (100) nach einem der vorangegangenen Ansprüche,
**dadurch gekennzeichnet, dass**
das mindestens eine Einbaustück (120) eine drehfest angeordnete Lagerbuchse (128) aufweist, welche den Aufnahmeraum aufspannt, wobei der mindestens eine Niederdruckzu- und Niederdruckablaufkanal (122', 124') für das Kühl- und/oder Schmiermittel in dem Einbaustück die Lagerbuchse durchdringt.

7. Walzgerüst (100) nach einem der vorangegangenen Ansprüche,
**dadurch gekennzeichnet,**
**dass** zwei Arbeitswalzen (180) vorgesehen sind, welche zwischen den zwei Stützwalzen angeordnet sind, und welche einen Walzspalt aufspannen zum Walzen des Walzgutes.

8. Walzgerüst (100) nach einem der vorangegangenen Ansprüche,
**dadurch gekennzeichnet, dass**
die mindestens eine Niederdruckpumpe (130) in die Niederdruckzulaufleitungen (122) und/oder in die Niederdruckablaufleitungen (124) des Niederdruckkreislaufs eingebaut ist.

9. Walzgerüst (100) nach einem der vorangegangenen Ansprüche,
**dadurch gekennzeichnet,**
**dass** die Ölfilmlager quasi ölverlustfrei betreibbar ausgebildet sind; und dass dem Walzgerüst (100) mindestens zwei Tanks (140', 140") mit mindestens zwei zugeordneten Niederdruckkreisläufen für die vier Ölfilmlager individuell zugeordnet sind.

10. Walzgerüst (100) nach Anspruch 9,
**dadurch gekennzeichnet,**
**dass** ein erster gemeinsamer Niederdruckkreislauf mit einer ersten Niederdruckpumpe (130') und einem ersten gemeinsamem Tank (140') für die beiden Ölfilmlager der oberen und der unteren Stützwalze an dem Walzenständer auf der Antriebsseite (100') vorgesehen ist; und
**dass** ein zweiter gemeinsamer Niederdruckkreislauf mit einer zweiten Niederdruckpumpe (130") und einem zweiten gemeinsamen Tank (140") für die Ölfilmlager der oberen und der unteren Stützwalze an dem Walzenständer auf der Bedienseite (100") vorgesehen ist.

11. Walzgerüst (100) nach Anspruch 10,
**dadurch gekennzeichnet,**
**dass** der erste Tank (140') oben auf dem Walzenständer auf der Antriebsseite (100') und/oder der zweite Tank (140") oben auf dem Walzenständer auf der Bedienseite (100") angeordnet ist.

12. Walzgerüst (100) nach Anspruch 9,
**dadurch gekennzeichnet,**
**dass** ein erster gemeinsamer Niederdruckkreislauf mit mindestens einer ersten Niederdruckpumpe (130-1) und einem ersten gemeinsamen Tank (140-1) für die beiden Ölfilmlager der oberen Stützwalze auf der Antriebsseite (100') und der Bedienseite (100") vorgesehen ist; und dass ein zweiter gemeinsamer Niederdruckkreislauf mit einer zweiten Niederdruckpumpe (130-2) und einem zweiten gemeinsamen Tank (140-2) für die beiden Ölfilmlager der unteren Stützwalze auf der Antriebsseite (100') und der Bedienseite (100") vorgesehen ist.

13. Walzgerüst (100) nach Anspruch 12,
**dadurch gekennzeichnet,**
**dass** der erste gemeinsame Tank (140-1) oben auf dem Walzenständer auf der Antriebsseite (100') oder oben auf dem Walzenständer auf der Bedienseite (100") angeordnet ist.

14. Walzgerüst (100) nach Anspruch 9,
**dadurch gekennzeichnet,**
**dass** jedem der vier Ölfilmlager (120) für die beiden Stützwalzen jeweils ein eigener Niederdruckkreislauf mit jeweils eigener Niederdruckpumpe (130-I, 130-II, 130-III, 130-IV) und jeweils eigenem Tank (140-I, 140-II, 140-III, 140-IV) individuell zugeordnet ist.

15. Walzstraße (200) mit einer Mehrzahl von in einer Linie hintereinander aufgestellten Walzgerüsten (100) zum Walzen von metallischem Walzgut; **dadurch gekennzeichnet,**
**dass** mindestens eines der Walzgerüste (100) ausgebildet ist nach einem der Ansprüche 1 bis 14.

16. Walzstraße (200) nach Anspruch 15,
**dadurch gekennzeichnet,**
**dass** die Tanks (140) der vorderen Walzgerüste der Walzstraße (200) mit einer ersten Ölsorte befüllt sind, und
**dass** die Tanks (140) der hinteren Walzgerüste der Walzstraße mit einer zweiten Ölsorte befüllt sind.

## Claims

1. Roll stand (100) for rolling preferably metallic rolling material, comprising:
two backing rolls each with two backing roll pins (110);
four chocks (120) in the form of oil film bearings each with a cylindrical receiving space for rotatable mounting of one of the backing roll pins (110), wherein the chocks each have in the interior thereof at least one low-pressure feel channel (122') for the feed of coolant and/or lubricant into the receiving space and at least one low-pressure drain channel (124') for draining of the coolant and/or lubricant from the receiving space; and
at least one low-pressure circuit with low-pressure feed lines (122) for connecting a tank (140) for the coolant and/or lubricant with the low-pressure feed channel (122') of the chock, low-pressure drain lines for connecting the low-pressure drain channel with the tank, and at least one low-pressure pump (130) for conveying the coolant and/or lubricant in the low-pressure circuit;
**characterised in that**
a transmission (150), which is arranged at that side of at least one of the chocks which is remote from the barrel for rotational coupling of the at least one low-pressure pump (130) with the backing roll pin (110) rotatably mounted in the receiving space, is provided.

2. Roll stand (100) according to claim 1, **characterised in that** the transmission (150) is constructed as a gearwheel transmission with a pinion (152) and a drive wheel (154), which are directly or indirectly rotationally coupled together; and the pinion (152) is placed on the drive shaft (134 of the low-pressure pump (130) to be secure against relative rotation or the free end of the drive shaft is constructed as the pinion (152).

3. Roll stand (100) according to claim 2, **characterised in that** the drive wheel (154) is constructed as an externally toothed gear ring (154') preferably connected at the side remote from the barrel with the backing roll pin (110) to be secure against relative rotation or with a pin bush (114) fitted on the backing roll pin to be secure against relative rotation; and the low-pressure pump (130) is so arranged that the pinion (152) of its drive shaft (134) is disposed in engagement, preferably direct engagement, with the externally toothed gear ring (154').

4. Roll stand (100) according to claim 2, **characterised in that** the drive wheel (154) is constructed as an internally toothed gear ring (154") which is connected with the backing roll pin (110) at the end thereof remote from the barrel to be secure against relative rotation, wherein the low-pressure pump (130) is arranged to be so premounted on the end of the backing roll pin that the pinion (152) of its drive shaft (134) is disposed in engagement, preferably direct engagement, with the internally toothed gear ring (154").

5. Roll stand (100) according to any one of the preceding claims, **characterised in that** the low-pressure pump (130) is integrated in the chock (120), for example installed in a niche of the chock.

6. Roll stand (100) according to any one of the preceding claims, **characterised in that** the at least one chock (120) has a bearing bush (128) which is arranged to be secure against relative rotation and which spans the receiving space, wherein the at least one low-pressure feed channel (122') and low-pressure drain channel (124') for the coolant and/or lubricant in the chock penetrate the bearing bush.

7. Roll stand (100) according to any one of the preceding claims, **characterised in that** two working rolls (180) which are arranged between the two backing rolls and which span a rolling gap for rolling of the rolling material are provided.

8. Roll stand (100) according to any one of the preceding claims, **characterised in that** the at least one low-pressure pump (130) is installed in the low-pressure feed lines (122) and/or in the low-pressure drain lines (124) of the low-pressure circuit.

9. Roll stand (100) according to any one of the preceding claims, **characterised in that** the oil film bearing is constructed to be operable quasi free of oil loss and that at least two tanks (140', 140") with at least two associated low-pressure circuits for the four oil film bearings are individually associated with the roll stand (100).

10. Roll stand (100) according to claim 9, **characterised in that** a first common low-pressure circuit is provided with a first low-pressure pump (130') and a first common tank (140') for the two oil film bearings of the upper and lower backing rolls at the roll housings on the drive side (100') and that a second common low-pressure circuit with a second low-pressure pump (130") and a second common tank (140") for the oil film bearings of the upper and lower backing rolls is provided at the roll housings on the operator side (100").

11. Roll stand (100) according to claim 10, **characterised in that** the first tank (140') is arranged at the top on the roll housing on the drive side (100') and/or the second tank (140") is arranged at the top on the roll housing on the operator side (100").

12. Roll stand (100) according to claim 9, **characterised in that** a first common low-pressure circuit with at least one first low-pressure pump (130-1) and a first common tank (140-1) for the two oil film bearings of the upper backing roll is provided on the drive side (100') and the operator side (100") and that a second common low-pressure circuit with a second low-pressure pump (130-2) and a second common tank (140-2) for the two oil film bearings of the lower backing roll is provided on the drive side (100') and the operator side (100").

13. Roll stand (100) according to claim 12, **characterised in that** the first common tank (140-1) is arranged at the top on the roll housing on the drive side (100') or at the top on the roll housing on the operator side (100").

14. Roll stand (100) according to claim 9, **characterised in that** a respective individual low-pressure circuit each with a respective individual low-pressure pump (130-I, 130-II, 130-III, 130-IV) and a respective individual tank (140-1, 140-II, 140-III, 140-IV) is individually associated with each of the four oil film bearings (120) for the two backing rolls.

15. Rolling train (200) with a plurality of roll stands (100), which are erected in succession in a line, for rolling metallic rolling material, **characterised in that** at least one of the roll stands (100) is constructed according to any one of claims 1 to 14.

16. Rolling train (200) according to claim 15, **characterised in that** the tanks (140) of the front roll stands of the rolling train (200) are filled with a first kind of oil and that the tanks (140) for the rear roll stands of the rolling train are filled with a second kind of oil.

## Revendications

1. Cage de laminoir (100) pour le laminage d'un produit de laminage de préférence métallique, présentant :
deux cylindres de support comprenant respectivement deux tourillons de cylindres de support (110) ;
quatre empoises (120) sous la forme de paliers du type à film d'huile comprenant respectivement un espace de réception de forme cylindrique pour que vienne s'y loger en rotation un des tourillons de cylindres de support (110) ;
dans laquelle les empoises présentent, en leur sein, respectivement un canal d'alimentation sous basse pression (122') destiné à l'alimentation d'un fluide de refroidissement et/ou d'un lubrifiant dans l'espace de réception et au moins un canal d'évacuation sous basse pression (124') destiné à l'évacuation du fluide de refroidissement et/ou du lubrifiant hors de l'espace de réception ; et
au moins un circuit de basse pression comprenant : des conduits d'alimentation sous basse pression (122) à des fins de liaison d'une cuve (140) pour le fluide de refroidissement et/ou le lubrifiant au canal d'alimentation sous basse pression (122') de l'empoise ; des conduits d'évacuation sous basse pression (124) à des fins de liaison du canal d'évacuation sous basse pression à la cuve ; et au moins une pompe basse pression (130) pour le transport du fluide de refroidissement et/ou du lubrifiant dans le circuit de basse pression ;
**caractérisée en ce qu'**on prévoit une transmission (150) qui est disposée du côté éloigné du corps de cylindre d'au moins une des empoises à des fins d'accouplement en rotation de ladite au moins une pompe basse pression (130) au tourillon de cylindre de support (110) logé en rotation dans l'espace de réception.

2. Cage de laminoir (100) selon la revendication 1, **caractérisée en ce que** la transmission (150) est réalisée sous la forme d'une transmission du type à roue dentée comprenant un pignon (152) et une roue motrice (154), qui sont montés l'un avec l'autre en rotation de manière directe ou de manière indirecte ; et le pignon (152) vient se placer solidaire en rotation sur l'arbre de transmission (134) de la pompe basse pression (130) ou bien l'extrémité libre de l'arbre de transmission est réalisée sous la forme du pignon (152).

3. Cage de laminoir (100) selon la revendication 2, **caractérisée en ce que** la roue motrice (154) est réalisée à la manière d'un anneau en forme de couronne dentée (154') muni d'une denture externe, qui est de préférence relié, du côté éloigné du corps de cylindre, solidaire en rotation au tourillon de cylindre de support (110) ou à une douille de tourillon (114) qui vient se placer solidaire en rotation sur le tourillon de cylindre de support ; et la pompe basse pression (130) est disposée d'une manière telle que le pignon (152) de son arbre de transmission (134) vient s'engrener, de préférence de manière directe, avec l'anneau en forme de couronne dentée (154') muni d'une denture externe.

4. Cage de laminoir (100) selon la revendication 2, **caractérisée en ce que** la roue motrice (154) est réalisée à la manière d'un anneau en forme de couronne dentée (154") muni d'une denture interne, qui est de préférence relié, du côté avant du tourillon de cylindre de support, éloigné du corps de cylindre, solidaire en rotation au tourillon de cylindre de support (110) ; dans laquelle la pompe basse pression (130) est disposée en amont sur le côté avant du tourillon de cylindre de support, d'une manière telle que le pignon (152) de son arbre de transmission (134) vient s'engrener, de préférence de manière directe, avec l'anneau en forme de couronne dentée (154") muni d'une denture interne.

5. Cage de laminoir (100) selon l'une quelconque des revendications précédentes, **caractérisée en ce que** la pompe basse pression (130) est intégrée dans l'empoise (120), par exemple est incorporée dans une niche de l'empoise.

6. Cage de laminoir (100) selon l'une quelconque des revendications précédentes, **caractérisée en ce que** ladite au moins une empoise (120) présente une douille de palier (128) montée non rotative, qui fixe l'espace de réception ; dans laquelle ledit au moins un canal d'alimentation sous basse pression et ledit au moins un canal d'évacuation sous basse pression (122', 124') pour le fluide de refroidissement et/ou pour le lubrifiant traverse la douille de palier dans l'empoise.

7. Cage de laminoir (100) selon l'une quelconque des revendications précédentes, **caractérisée en ce qu'**on prévoit deux cylindres de travail (180) qui viennent se disposer entre les deux cylindres de support et qui fixent une emprise pour le laminage du produit de laminage.

8. Cage de laminoir (100) selon l'une quelconque des revendications précédentes, **caractérisée en ce que** ladite au moins une pompe basse pression (130) est incorporée dans les conduits d'alimentation sous basse pression (122) et/ou dans les conduits d'évacuation sous basse pression (124) du circuit de basse pression.

9. Cage de laminoir (100) selon l'une quelconque des revendications précédentes, **caractérisée en ce que** les paliers du type à film d'huile sont réalisés pour être exploités d'une manière quasi exempte de perte d'huile ; et **en ce qu'**au moins deux cuves (140', 140"), comprenant au moins deux circuits de basse pression qui leur sont attribués, sont attribuées à la cage de laminoir (100) de manière individuelle pour les quatre paliers du type à film d'huile.

10. Cage de laminoir (100) selon la revendication 9, **caractérisée en ce qu'**on prévoit un premier circuit de basse pression commun comprenant une première pompe basse pression (130') et une première cuve commune (140') pour les deux paliers du type à film d'huile du cylindre de support supérieur et du cylindre de support inférieur contre le montant de laminoir du côté entraînement (100') ; et
**en ce qu'**on prévoit un deuxième circuit de basse pression commun comprenant une deuxième pompe basse pression (130") et une deuxième cuve commune (140") pour les deux paliers du type à film d'huile du cylindre de support supérieur et du cylindre de support inférieur contre le montant de laminoir du côté exploitation (100").

11. Cage de laminoir (100) selon la revendication 10, **caractérisée en ce que** la première cuve (140') est disposée en haut sur le montant de laminoir du côté entraînement (100') et/ou la deuxième cuve (140") est disposée en haut sur le montant de laminoir du côté exploitation (100").

12. Cage de laminoir (100) selon la revendication 9, **caractérisée en ce qu'**on prévoit un premier circuit de basse pression commun comprenant au moins une première pompe basse pression (130-1) et une première cuve commune (140-1) pour les deux paliers du type à film d'huile du cylindre de support supérieur du côté entraînement (100') et du côté exploitation (100") ; et **en ce qu'**on prévoit un deuxième circuit de basse pression commun comprenant au moins une deuxième pompe basse pression (130-2) et une deuxième cuve commune (140-2) pour les deux paliers du type à film d'huile du cylindre de support inférieur du côté entraînement (100') et du côté exploitation (100").

13. Cage de laminoir (100) selon la revendication 12, **caractérisée en ce que** la première cuve commune (140-1) est disposée en haut sur le montant de laminoir du côté entraînement (100') ou en haut sur le montant de laminoir du côté exploitation (100").

14. Cage de laminoir (100) selon la revendication 9, **caractérisée en ce que**, à chacun des quatre paliers du type à film d'huile (120) pour les deux cylindres de support, est attribué respectivement de manière individuelle, un propre circuit de basse pression comprenant respectivement une propre pompe basse pression (130-I, 130-II, 130-III, 130-IV) et respectivement une propre cuve (140-I, 140-II, 140-III, 140-IV).

15. Train de laminoir (200) comprenant une multitude de cages de laminoir (100) disposées en ligne les unes derrière les autres pour le laminage d'un produit de laminage métallique, **caractérisé en ce qu'**au moins une des cages de laminoir (100) est réalisée conformément à l'une quelconque des revendications 1 à 14.

16. Train de laminoir (200) selon la revendication 15, **caractérisé en ce que** les cuves (140) des cages de laminoir avant du train de laminoir (200) sont remplies avec une première sorte d'huile ; et **en ce que** les cuves (140) des cages de laminoir arrière du train de laminoir sont remplies avec une deuxième sorte d'huile.
